# DEMANDE DE BREVET EUROPEEN

(11) **EP 2 164 053 A1**
(43) Date de publication de la demande: **17.03.2010**
(21) Numéro de dépôt: 08305543.4
(22) Date de dépôt: 11.09.2008
(51) Int. Cl.: G07F 7/10, G06K 19/073, H01L 23/58, G06F 21/00

(54) **Procédé de contre-attaque autonome en réponse à une ou plusieurs agressions physiques, et dispositif associé**

(71) Demandeur: GEMPLUS, 13420 Gémenos (FR)
(72) Inventeur: Brun, Alain, 13400, Aubagne (FR)

(57) **Abrégé**

La présente invention décrit un procédé de protection de tout ou partie d'un dispositif électronique contre les attaques physiques menées à son encontre en utilisant tout ou partie de l'énergie emmenée par l'attaque pour réaliser au moins une action dite de contre attaque.

Ce procédé est particulièrement adapté aux attaques menées contre des dispositifs électronique alors que ceux-ci ne sont pas alimentés en énergie, ou bien lorsque l'on ne veut pas faire dépendre la protection du dispositif de son alimentation générale.

L'invention décrit également le dispositif mettant en oeuvre un tel procédé.

## Description

L'invention concerne un procédé de contre-attaque autonome, ainsi que le dispositif associé.

L'invention porte en particulier sur un moyen de protéger un dispositif électronique contre certaines attaques physiques menées à son encontre.

Les dispositifs électroniques sont de plus en plus présents dans notre société, et notamment dans des systèmes à « fraude très rentable ». Nous entendons par « fraude très rentable » les systèmes pour lesquels la fraude peut générer un profit qui va au delà de la seule valeur structurelle de l'objet frauduleux.
Parmi ces systèmes on peut citer le système bancaire. En effet une carte de crédit volée fonctionnelle vaut bien plus qu'une simple carte de plastique car elle peut permettre d'obtenir des liquidités, ou d'acheter des biens ou des services.
De même nous pouvons citer les systèmes de citoyenneté électronique. Dans ce deuxième exemple une carte d'identité frauduleuse peut permettre de cacher un individu, ou encore d'obtenir des services, par exemple sociaux.
Ces deux exemples décrivent des systèmes à « fraude très rentable » dans lesquels des dispositifs électronique sont de plus en plus présents.

Les systèmes bancaires développent de plus en plus l'utilisation de dispositifs électroniques pour effectuer paiements ou transactions quelconques. Ces dispositifs sont couramment des cartes à puces, mais peuvent aussi être des dispositifs plus complexes avec une fonctionnalité bancaire (par exemple agenda électronique ou téléphone portable) Dans le domaine de la citoyenneté électronique, les passeports électroniques, les cartes d'identité ou les permis de conduire embarquant des puces électroniques sont de plus en plus présents.

La très forte rentabilité de la fraude dans ces systèmes multiplie le nombre des attaquants et des attaques à leur encontre. Nous appellerons attaque toute action menée à l'encontre d'un dispositif électronique et destinée à :
- accéder à une information confidentielle (attaque en confidentialité)
- modifier une information hors du contexte de fonctionnement normal (attaque en intégrité)
- empêcher le dispositif de fonctionner normalement (attaque en dénie de service) Deux grandes familles d'attaques peuvent être distinguées : les attaques logiques et les attaques physiques. Les attaques logiques sont menées au niveau de « l'intelligence » du dispositif. De telles attaques pourront par exemple consister en :

- faire croire au dispositif que l'attaquant est un interlocuteur normal, afin de lui extirper des informations confidentielles.
- Subtiliser des conversations officielles entre un dispositif et son interlocuteur, et essayer d'en extraire des informations confidentielles.
- Fournir des informations erronées au dispositif enfin de lui faire relaisser des opérations non prévues.
   Toutes ces attaques connaissent, a ce jour un grand éventail de « protections ». Ces protections, contre des attaques logiques, sont des protections logiques, donc le plus souvent logicielles.

Les attaques physiques quand à elles, sont basées sur la création d'un événement « anormal » influençant le comportement du dispositif.
Une attaque physique peut par exemple consister en une exposition d'un ou de plusieurs composants électronique à une vive lumière (par exemple laser), ou à une température violente (en chaud ou en froid).
D'autres exemples d'attaques physiques peuvent consister en un contact physique invasif (perceuse), exposition à un produit corrosif, etc....

A ce jour, les solutions existantes destinées à protéger les dispositifs contre les attaques physiques sont de deux natures :
- protection passives, par exemple blindage physique de un ou plusieurs composants (grille, grille active, ...).
   Ces solutions ont comme but de ralentir le déroulement de l'attaque, voire de la rendre plus difficile en ajoutant des obstacles entre l'attaquant et sa cible.

En aucun cas l'utilisation de protections passives ne peut assurer un niveau de sécurité car chaque matériau qui pourrait être utilisé comme « barrière de protection » pour protéger tout ou partie du dispositif a une faiblesse, qu'elle soit physique, thermique ou chimique qui fait que ce matériau peut être ôté, dégradé
- protections logiques, par exemple au moyens de capteurs analysés par l'intelligence du dispositif, et d'une politique de sécurité. Contrairement aux protections passives, les protections logiques ont le pouvoir, par l'application d'une politique de sécurité, de protéger le dispositif, en réagissant. Ces réactions peuvent être par exemple l'effacement de données critiques, ou encore l'envoie d'alerte, voire la falsification de données en danger.

La grande fragilité de ces protections réside dans le fait qu'elles nécessitent une alimentation en énergie.

Ainsi, des attaques physiques menées à l'encontre d'un dispositif protégé par de telles solutions, mais non alimenté, pourraient être menées sans le moindre souci.

De même si l'attaquant maitrise les sources d'approvisionnement énergétique d'un dispositif, il peut faire en sorte de rendre inopérantes ses protections logiques.

Des essais ont été faits avec l'utilisation de batteries indépendantes destinées aux protections du dispositif. L'analyse de telles solutions montre que des solutions aussi simple que le déchargement de la batterie en question, ou encore son extraction rendent ces protections coûteuses et fort peu efficaces.

Ainsi la présente invention tend à apporter une solution aux attaques physiques menées contre un dispositif électronique pour lequel on ne peut se fier aux ressources énergétiques courantes.

A cette fin, la présente invention a tout d'abord pour objet un procédé de sécurisation d'un dispositif électronique contre les attaques physiques menées contre tout ou partie des composants électroniques qui le composent comportant au moins les étapes de :
- capture de tout ou partie de l'énergie fournie par l'attaquant lors de l'attaque, dans une réserve d'énergie lorsque ladite réserve d'énergie atteint une seuil S1
- utilisation de la réserve d'énergie pour effectuer une action dite de contre-attaque.
   Selon un mode de réalisation, les attaques physiques sont menées contre le dispositif électronique alors que celui-ci n'est pas alimenté en énergie.

Selon un mode de réalisation, le seuil S1 est calculé en fonction de l'action de contre-attaque.

L'action de contre-attaque peut consister par exemple en un effacement de tout ou partie de la mémoire effaçable du dispositif électronique, ou bien en l'écriture d'une zone mémoire prédéfinie, ou en l'altération d'un composant électronique prévu à cet effet.

La présente invention a également pour objet un dispositif électronique comportant au moins un processeur et une mémoire non volatile, susceptible d'être la cible d'attaque physique de la part d'un attaquant, et possédant :
- des moyens pour capturer tout ou partie de l'énergie fournie par l'attaquant lors de l'attaque dans une réserve d'énergie
- des moyens pour mesurer la quantité d'énergie accumulée dans la réserve par rapport à un seuil S1
- des moyens pour utiliser la réserve d'énergie afin d'effectuer une action dite de contre-attaque.

Selon un mode de réalisation, les attaques physiques sont menées contre le dispositif électronique alors que celui-ci n'est pas alimenté en énergie.

Selon un mode de réalisation le seuil S1 est calculé en fonction des besoins en énergie de l'action de contre-attaque.

Le dispositif électronique possède des moyens pour, par exemple, effacer tout ou partie de la mémoire effaçable dudit dispositif électronique en utilisant la réserve d'énergie, ou écrire une zone mémoire prédéfinie en utilisant la réserve d'énergie, ou encore altérer un composant électronique prévu à cet effet en utilisant la réserve d'énergie.

D'autres caractéristiques et avantages de l'invention ressortiront clairement de la description qui en est faite ci-après, à titre indicatif et nullement limitatif, en référence aux dessins annexés dans lesquels :
- La figure 1 représente schématiquement un mode d'implémentation de l'invention, et son fonctionnement en présence d'attaques physique de la part d'un attaquant.
- La figure 2 représente schématiquement les phénomènes de charge et de décharge de composants pouvant entrer dans une mise en oeuvre de l'invention.
- La figure 3 illustre le phénomène d'accumulation d'énergie au fil des attaques, ainsi que le seuil de déclenchement de l'action résultante de l'attaque.

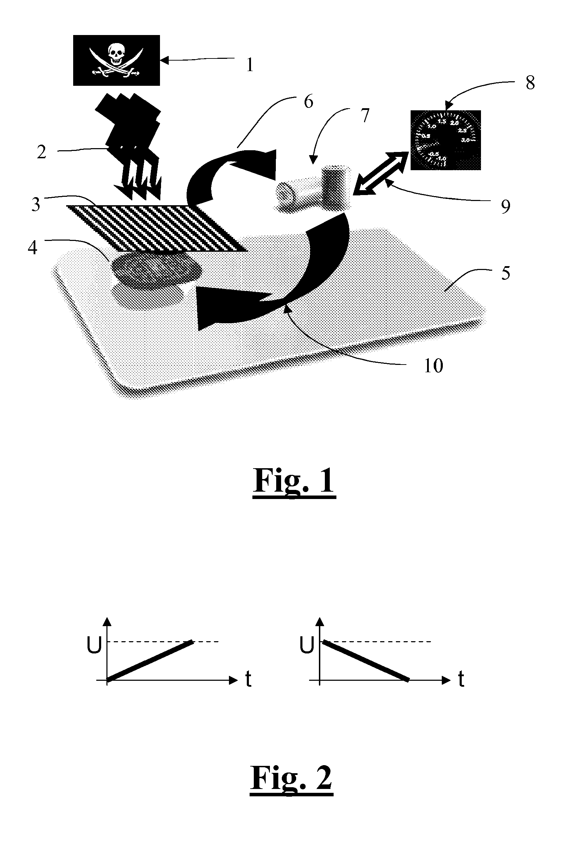

Dans la figure 1, un dispositif électronique 5 est représenté par une carte a puce, et possède un ensemble de composants électroniques 4 représenté par la puce de la carte a puce. Nous soulignerons que la présente invention ne se limite pas aux cartes a puce, mais est applicable a tout dispositif électronique, notamment dongle USB, téléphone portable, agenda électronique, ...

L'attaquant 1 est représenté par un drapeau pirate, et l'attaque physique qu'il mène à l'encontre du dispositif 5 est représentée par les éclairs 2.
Cette attaque peut se faire au travers d'une exposition à une ou plusieurs sources lumineuses avec des intensités ou des longueurs d'onde particulière. Nous donnerons comme exemple une exposition à des rayonnements ultra violet, infra rouge, ou encore le « tir » de rayons laser sur un ou plusieurs composants.
Un autre type d'attaque physique peut se faire directement par exemple par l'abrasion, le perçage ou la pression d'un ou plusieurs composants. Ces attaques peuvent être réalisées par des outils tels que des chignoles, vérins, ponceuses ...

Les attaques chimiques, le plus souvent destinées à accéder aux couches profondes des composants électroniques sont des attaques physiques particulièrement dangereuses pour les dispositifs électroniques, car elles sont souvent utilisées pour extraire tout ou partie des protections passives installées dans le dispositif. Ces attaques se mènent le plus souvent avec l'aide de solvants, ou d'acides.
Parmi les autres attaques physiques possibles, nous noterons par exemple les attaques soniques, électromagnétiques, thermiques ...
L'invention est représentée sur la figure 1 par un bouclier 3. Le but étant de mettre en évidence le fait que l'attaque 2 menée à l'encontre le l'électronique 4 doit passer par l'invention pour atteindre sa cible.
Dans une implémentation de l'invention, les composants de l'invention seront en effet disposés entre l'électronique 4 et le monde extérieur afin de protéger toute tentative d'accès à ladite électronique.
Un mode particulièrement avantageux d'implémentation de l'invention consiste en l'inclusion de la présente invention dans le corps même des composants à protéger.

Un autre mode particulièrement avantageux d'implémentation de l'invention consiste en la prise en compte du « bouclier » 3 dans le fonctionnement normal du ou des composant électronique à protéger. En effet, afin d'empêcher toute tentative d'extraction du « bouclier » 3, cette implémentation consiste en l'utilisation des propriétés électriques du bouclier afin de permettre le bon fonctionnement du ou des composants à protéger. De cette manière, si le bouclier est ôté, le ou les composants électroniques peuvent par exemple le détecter, ou encore le fonctionnement du ou des composants électroniques peut être par exemple altéré, ou empêché.

Lors de la réalisation de l'attaque 2, l'énergie dépensée pour réaliser l'attaque doit donc entrer en contact avec l'invention 3 avant de pouvoir espérer atteindre le ou les composants 4 cibles de l'attaque. La nature même du « bouclier » 3 lui permet de capter tout ou partie de l'énergie de l'attaque, et de la conserver 6.
Cette conservation est schématisée dans la figure 1 par une flèche 6 représentant l'action de captage de l'énergie, et une batterie 7 qui symbolise le stockage en lui-même.
Dans la majeure partie des modes de réalisation de l'invention, les composants du bouclier 3 serviront eux même d'accumulateur.
Nous noterons ici que la nature du bouclier est très dépendante de la nature de l'attaque physique contre laquelle on souhaite protéger le dispositif 5. En effet, le bouclier doit être composé d'éléments capable de capter et emmagasiner de l'énergie.
Selon un mode de réalisation de l'invention, les composants du bouclier 3 captent l'énergie déployée lors de l'attaque 2, et la convertissent en énergie électrique avant de la stocker. Cette étape de conservation peut se faire entre deux énergies de quelle nature que ce soit.
Dans le cas ou l'attaque contre laquelle on souhaite protéger le dispositif 5 est composée d'énergie lumineuse, le bouclier sera par exemple composé en tout ou partie de photocapaciteur qui sont apte à capter l'énergie lumineuse, la convertir en électricité et l'emmagasiner.
Une fois que la quantité globale d'énergie emmagasinée, atteint un seuil prédéfini, symbolisé par le compteur gradué 8 dans la figure 1, tout ou partie de cette énergie est utilisée 10 pour mettre en oeuvre une action dite de contre-attaque.

La nature de l'énergie à fournir est dépendante de la contre attaque. Si l'énergie nécessaire à la contre attaque n'est pas de la même nature que celle emmagasinée, il faut prévoir une conversion.
Dans la très grande majorité des modes d'implémentation, l'énergie utilisée pour la contre attaque sera de l'énergie électrique, qui permettra d'alimenter un ou plusieurs composants électroniques afin de leur faire exécuter la contre attaque.
Cette contre attaque va par exemple prendre la forme d'un effacement de tout ou partie d'une mémoire, qui peut par exemple contenir des codes ou des clefs particulièrement critiques.

Cette contre attaque peut également prendre la forme d'une écriture d'une information dans une mémoire, par exemple inscrire un repère qui sera ultérieurement lu et interprété.
Cette contre attaque peut également se faire au travers de l'altération de tout ou partie d'un ou plusieurs composants électroniques. Un exemple est la destruction d'un fusible.

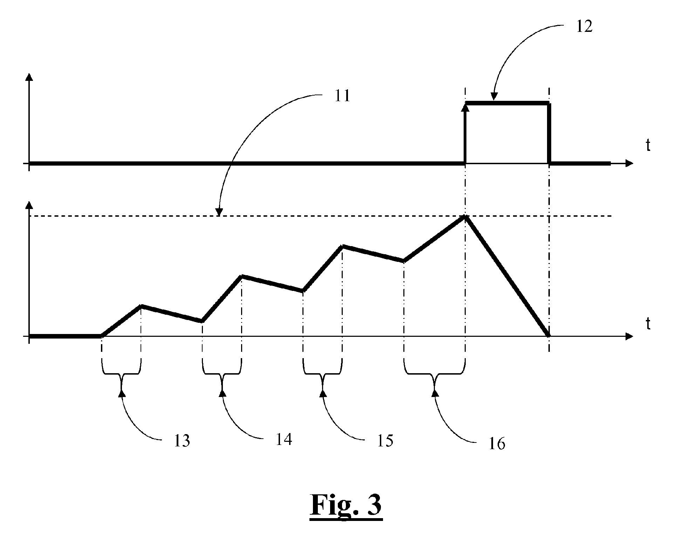

Certains composants comme par exemple les photocapaciteurs, accumulent de l'énergie électrique s'ils sont soumis à une énergie lumineuse, mais ils se déchargent naturellement comme l'illustre la figure 2.
Dans le cas illustré par la figure 3, il faudra que le bouclier capture de l'énergie durant plusieurs attaques successives 13, 14, 15, 16, pour atteindre le niveau d'énergie 11 nécessaire au déclenchement de la contre attaque 12.

La présente invention est particulièrement efficace pour protéger des dispositifs soumis a des attaques physiques alors que leur électronique n'est pas alimentée en énergie (ce qui bloque les protections logiques), mais aussi aux dispositifs pour lesquels on veut que la protection soit autonome. Que ce soit parce que l'on ne fait pas confiance a la source principale d'énergie (qui peut être espionnée, ou contrôlée par l'attaquant), soit parce que la source principale d'énergie n'est pas adaptée, par exemple en nature ou en quantité.

Dans un mode particulièrement avantageux de mise en oeuvre de l'invention, le bouclier selon l'invention contient des éléments de différents types, capables de capturer des énergies de types différents. Par exemple des composants capable de capturer de l'énergie lumineuse, des composants capable de capturer de l'énergie électromagnétique et des composants capable tirer de l'énergie en cas d'attaque chimique.

## Revendications

1. Procédé de sécurisation d'un dispositif électronique (5) contre les attaques physiques (2) menées contre tout ou partie des composants électroniques (4) qui le composent **caractérisé en ce qu'**il comporte au moins les étapes de :
- capture (6) de tout ou partie de l'énergie fournie par ledit attaquant (1) lors de ladite attaque (2), dans une réserve d'énergie (7) lorsque ladite réserve d'énergie atteint une seuil S1
- utilisation (10) de ladite réserve d'énergie pour effectuer une action dite de contre-attaque.

2. Procédé selon la revendication 1 **caractérisé en ce que** lesdites attaques physiques sont menées contre ledit dispositif électronique alors que celui-ci n'est pas alimenté en énergie.

3. Procédé selon l'une des revendications 1 ou 2,
**caractérisé en ce que** ledit seuil S1 est calculé en fonction de ladite action de contre-attaque.

4. Procédé selon l'une des revendications 1 à 3,
**caractérisé en ce que** ladite action de contre-attaque consiste en un effacement de tout ou partie de la mémoire effaçable dudit dispositif électronique.

5. Procédé selon l'une des revendications 1 à 3,
**caractérisé en ce que** ladite action de contre-attaque consiste en l'écriture d'une zone mémoire prédéfinie.

6. Procédé selon l'une des revendications 1 à 3,
**caractérisé en ce que** ladite action de contre-attaque consiste en l'altération d'un composant électronique prévu à cet effet.

7. Dispositif électronique (5) comportant au moins un processeur et une mémoire non volatile, susceptible d'être la cible d'attaque physique (2) de la part d'un attaquant (1), **caractérisé en ce qu'**il possède
- des moyens pour capturer (6) tout ou partie de l'énergie fournie par ledit attaquant lors de ladite attaque dans une réserve d'énergie (7)
- des moyens (8) pour mesurer la quantité d'énergie accumulée dans ladite réserve (7) par rapport à un seuil S1
- des moyens pour utiliser (10) ladite réserve d'énergie afin d'effectuer une action dite de contre-attaque.

8. Dispositif selon la revendication 7 **caractérisé en ce que** lesdites attaques physiques sont menées contre ledit dispositif électronique alors que celui-ci n'est pas alimenté en énergie.

9. Dispositif selon l'une des revendications 7 ou 8, **caractérisé en ce que** ledit seuil S1 est calculé en fonction des besoins en énergie de ladite action de contre-attaque.

10. Dispositif selon l'une des revendications 7 à 9, **caractérisé en ce qu'**il possède des moyens pour effacer tout ou partie de la mémoire effaçable dudit dispositif électronique en utilisant ladite réserve d'énergie.

11. Procédé selon l'une des revendications 7 à 9,
**caractérisé en ce qu'**il possède des moyens pour écrire une zone mémoire prédéfinie en utilisant ladite réserve d'énergie.

12. Procédé selon l'une des revendications 7 à 9,
**caractérisé en ce qu'**il possède des moyens pour altérer un composant électronique prévu à cet effet en utilisant ladite réserve d'énergie.
